# EUROPEAN PATENT APPLICATION

(11) **EP 4 582 703 A1**
(43) Date of publication of application: **09.07.2025**
(21) Application number: 24150424.0
(22) Date of filing: 04.01.2024
(51) Int. Cl.: F16B 5/06, F16B 21/00, F16B 21/04, F16B 19/10

(54) **BI-ADJUSTABLE COUPLING INTERFACE BETWEEN BOUNDARY FACES**

(71) Applicant: Airbus Operations GmbH, 21129 Hamburg (DE)
(72) Inventor: Werthmann, Christopher Victor, 21129 Hamburg (DE); Benthien, Hermann, 21129 Hamburg (DE)

(57) **Abstract**

The present invention relates to a connection interface (10) for mounting a building component (12) to a support structure (14). In order to provide an improved way of joining constructional parts, the connection interface comprises at least one connector (16) and at least one aligner (18). The connector comprises: a primary fastening region (20) at a first end (22) configured to be fastened to one of a first plurality of mounting points (24) at the support structure and a secondary fastening region (26) at a second end (28) configured to be fastened to one of a second plurality of mounting points (30) at the building component (12). The aligner is arranged between the first end and the second end; and wherein the aligner is configured to align the connector in an oriented manner according to an alignment value for bringing the building component and the support structure in an alignment arrangement (32). The aligner provides an adjustment in at least two spatial directions.

## Description

### FIELD OF THE INVENTION

The present invention relates to a way of connectively aligning a constructional member with a construction assembly and relates in particular to a connection interface for mounting a building component to a support structure, to a measuring device, to a system for aligning a building component and a support structure and to a method for adjusting a connection interface.

### BACKGROUND OF THE INVENTION

The coupling of different constructional parts, for example via a dedicated joint, may pose a cumbersome step in an assembly process of, e.g., aircraft constructions. The joint may not only provide a stable connection between the constructional parts. It may also provide for a delicate alignment between the constructional parts to join them to a single functional entity. An alignment via the joint may be required due to constructional variances in one of the constructional parts. However, constructional variances in constructional parts may lead to an enhanced mounting time of the j oint and hamper automatization of the assembly process.

### SUMMARY OF THE INVENTION

There may thus be a need for an improved way of joining constructional parts.

The object of the present invention is solved by the subject-matter of the independent claims; further embodiments are incorporated in the dependent claims. It should be noted that the following described aspects of the invention apply also for the connection interface for mounting the building component to the support structure, for the measuring device, for the system for aligning the building component and the support structure and for the method for adjusting the connection interface.

According to the present invention, a connection interface for mounting a building component to a support structure is provided. The interface comprises at least one connector and at least one aligner. The connector comprises a primary fastening region at a first end configured to be fastened to one of a first plurality of mounting points at the support structure and a secondary fastening region at a second end configured to be fastened to one of a second plurality of mounting points at the building component. The aligner is arranged between the first end and the second end. The aligner is configured to align the connector in an oriented manner according to an alignment value for bringing the building component and the support structure in an alignment arrangement. The aligner provides an adjustment in at least two spatial directions.

As an advantage, a coupling between the building component and the support structure is achieved that can be adjusted to both, the building component and the support structure.

As a further advantage, constructional and geometrical differences of each of the building component and the support structure can be accepted and compensated by a connection interface.

According to an example, the aligner is further configured to orient the connector by a plurality of alignment elements. The alignment elements are configured for abutting in a form-fitting manner to a mounting area at the first and the second plurality of mounting points to provide an adjustment of the connector.

According to an example, the plurality of alignment elements comprises at least one x-direction alignment element, at least one y-direction alignment element, at least one z-direction alignment element. The x-direction alignment element is configured to render a length of the connector between pairing points. The y-, z-direction alignment elements are configured to adjust a y- and z-position of the connector with respect to one of the first and the second plurality of mounting points.

According to an example, the y, z-direction alignment elements are provided as a double excentre assembly from excentre elements that provide a form-fitting connection between the first and the second plurality of mounting points and the connector. The connector is configured to comprise the x-direction alignment element as an x-extendable bolt element. The x-extendable bolt element provides for a sticked tolerance adjustment between the pairing points. At least one excentre element of the double excentre assembly conforms with the connector at its maximum extendable length.

According to the present invention, also a measuring device for mounting of a building component to a support structure with a connection interface is provided. The measuring device comprises an optical detection unit, a processing unit and an output. The optical detection unit is configured to detect a first plurality of mounting points at the support structure and to detect a second plurality of mounting points at the building component. The processing unit is configured to: determine a first geometrical relation of the detected first plurality of mounting points, to determine a second geometrical relation of the detected second plurality of mounting points, to compare the determined first and second geometrical relations to obtain deviations in view of a matching of the first plurality of mounting points with the second plurality of mounting points, and to compute an alignment value based on the obtained geometrical differences for adjusting a connector in an orienting manner through an aligner, both provided by a connection interface between each pair of points of the first plurality of mounting points and the second plurality of mounting points, to bring the building component and the support structure in an alignment arrangement. The output is configured to output the alignment value for an adjustment of the connector.

As an advantage, a faster and more efficient way is provided in compensating for tolerances at each one of the building component and the support structure by a single connection interface.

According to an example, the processing unit is further configured to compare the determined first geometrical relation with a preset support structure target geometry to obtain a support structure-based difference and to compare the determined second geometrical relation with a preset building component target geometry to obtain a building component-based difference. The output is configured to output the alignment value based on the support structure-based difference and the building component-based difference to adjust the connector to both, the building component and the support structure.

According to an example, the alignment value is configured to account for changes of the building component and the support structure before and after mounting to the alignment arrangement.

According to the present invention, also a system for aligning a building component and a support structure is provided. The system comprises a measuring device according to one of the previous examples, a connection interface according to one of the previous examples, a connection interface adjustment device, a transport unit interface with a pick-up unit and an assembly unit. The measuring device is connected to the connection interface adjustment device to transfer an alignment value to the connection interface adjustment device. The connection interface adjustment device is configured to hold the connection interface while adjusting at least one connector via at least one aligner according to the alignment value to provide an adjusted connection interface. The transport unit interface is configured for: Taking-up of the adjusted connection interface with the pick-up unit, transferring of the adjusted connection interface in a predetermined orientation to a second plurality of mounting points of a building component and Releasing the adjusted connection interface in a predetermined orientation towards the building component to form an interfaced building component. The assembly unit is configured for transferring the interfaced building component towards the support structure and establishing connectors between each pair of points of the second plurality of mounting points and a first plurality of mounting points.

As an effect, the connection interface allows for an automatization of the assembly of the alignment arrangement from the building component and the support structure.

As an advantage, manual installation is substituted by an automatized and autonomous installation procedure that reduces costs, time and energy of the installation.

According to the present invention, also a method for adjusting a connection interface for aligning a building component with a support structure is provided. The method comprises the steps:
- Detecting a first plurality of mounting points at the support structure.
- Detecting a second plurality of mounting points at the building component.
- Determining a first geometrical relation of the detected first plurality of mounting points.
- Determining a second geometrical relation of the detected second plurality of mounting points.
- Comparing the determined first and second geometrical relations to obtain deviations in view of a matching of the first plurality of mounting points with the second plurality of mounting points.
- Computing an alignment value based on the obtained geometrical differences for adjusting a connector in an orienting manner through an aligner, both provided by a connection interface between each pair of points of the first plurality of mounting points and the second plurality of mounting points, to bring the building component and the support structure in an alignment arrangement.
- Outputting the alignment value.

As an advantage, the replacement of new with old cabin equipment is enabled. As a further advantage, the replacement of new with old cabin equipment is facilitated and accelerated. As a further advantage, a higher adaptability of cabin equipment is provided by the connection interface.

According to an aspect, a bi-adjustable coupling interface between boundary faces is provided.

According to an aspect, a coupling framework between a primary structure, like an airframe, subjected to aerodynamic loads and a customized structure, like cabin equipment, is provided. The customized structure may also be provided as a primary structure component. The coupling framework is defined adjustable in three spatial directions. The coupling framework comprises coupling elements. The coupling elements are configured to connect the cabin equipment to the primary structure at coupling sites. In order to arrange and align the cabin equipment towards the primary structure, such that the cabin equipment and the primary structure form a functioning unit, like e.g. a door frame and a door, the coupling elements of the coupling framework can be oriented by compensating elements. In that manner, the compensating elements are configured to compensate for a discrepancy of the coupling points of the primary structure and the coupling points of the cabin equipment that would otherwise lead to a misalignment between the primary structure and the cabin equipment that might for example lead to the door in the door frame not being lockable properly. Discrepancy of the coupling sites might stem from tolerances between the primary structure and the cabin equipment. Here a tolerance compensation is focused from the primary structure and the cabin equipment itself on the connection between the primary structure and the cabin equipment. The coupling interface and the compensating elements are configured to provide a plug-and-play interface. As such the coupling framework can be brought into a preconfigured state of its compensating elements before being plugged or mounted to one of the primary structure or the cabin equipment. Furthermore, a measuring device is provided for measuring discrepancies between the pairing coupling sites of the building component and the support structure and deviating a value therefrom to align the building component and the support structure with a provided assembly system.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a general scheme of an example of a connection interface.
Fig. 2 shows a cross-section of a general scheme of an example of a connection interface in bounding interaction with mounting points.
Fig. 3 shows a general scheme of an example of a measuring device.
Fig. 4 shows a general scheme of an example of a system for aligning a building component and a support structure.
Fig. 5 shows basic steps of an example of a method for adjusting a connection interface.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of, when preceding a list of elements, modify the entire list of elements and do not modify the individual elements of the list.

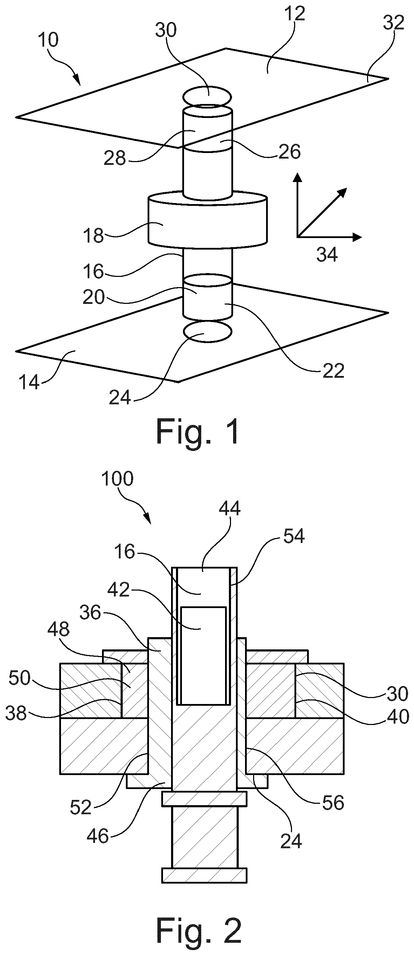

Fig. 1 schematically shows a general scheme of an example of a connection interface 10. The connection interface 10 for mounting a building component 12 to a support structure 14. The interface comprises at least one connector 16 and at least one aligner 18. The connector 16 comprises a primary fastening region 20 at a first end 22 configured to be fastened to one of a first plurality of mounting points 24 at the support structure 14 and a secondary fastening region 26 at a second end 28 configured to be fastened to one of a second plurality of mounting points 30 at the building component 12. The aligner 18 is arranged between the first end 22 and the second end 28 and wherein the aligner 18 is configured to align the connector 16 in an oriented manner according to an alignment value for bringing the building component 12 and the support structure 14 in an alignment arrangement 32. The aligner 18 provides an adjustment in at least two spatial directions, as shown by arrow 34 in Fig. 1.

The term "connection interface" relates to a framework skin or layer that provides a coupling, linking, junction or joint between a boundary face of two objects, as shown in Fig. 1.

The term "building component 12" relates to an object to be joined with another object.

The term "support structure 14" relates to a foundational structure, a base structure, a framework, a carrier structure for carrying and supporting the function of the building component 12.

The term "connector" relates to an arrangement or to a single element that provides a junction, a bridging or a linkage between attachment sites of two objects. The connector 16 is not necessarily provided from a single piece of material, as shown in Fig. 1, it may also be provided by an arrangement of single connector elements.

In an example, the connector 16 is a fastening structure.

The term "aligner" relates to an object that is formed to interact with the connector 16 in order to make it follow a predetermined vector in three spatial coordinates and is configured to reversibly fix the connector 16 at the predetermined vector, as shown in Fig. 1.

The at least one aligner 18 can also be referred to as aligners or aligner.

In an example, the connection interface 10 comprises a plurality of connector 16s and aligner 18s to provide a matrix-like framework coupling structure.

The term "fastening region" relates to a section at the connector 16 that is formed for a form-fitting engagement with one of the first and second plurality of mounting points 24, 30, as shown in Fig. 1.

In an example, the fastening region can be provided from protrusions, like a threaded profile or a plurality of toothed elements.

In an example, the fastening region is provided with lateral extensions forming a Bayonet type of connection with bushings or grooves at the first and second plurality of mounting points 24, 30 to receive the lateral extensions, not shown in Fig. 1.

In an example, the first and second plurality of mounting points 24, 30 are provided with protrusion for a form-fitting engagement with protrusions provided at the fastening region, not shown in Fig. 1.

In an example, the first and second plurality of mounting points 24, 30 provides sleeve-like elements like blind nuts to form a form-fitting engagement with the fastening region, not shown in Fig. 1.

The fastening points can also be referred to as interface points or coupling points.

The term "mounting points" relates to fittings provided by an object that can be engaged with a fastening structure such as the connector 16 to fixate the connector 16 at the object.

In an example, the first and second plurality of mounting points 24, 30 is provided as a group of points that is arranged in a certain pattern to provide for a stable connection coupling between the building component 12 and the support structure 14, not shown in Fig. 1.

The first and second plurality of mounting points 24, 30 can also be referred to as mounting points or mounting points or point.

In an example, the connector 16 is fastened to a mounting point 24, 30 such that the mounting point 24, 30 bears the connector 16 in a rotative manner.

The term "oriented manner" relates to the way in which the aligner 18 tunes the connector 16 to allow for a proper and predetermined alignment between the building component 12 and the support structure 14, as shown in Fig. 1.

The term "alignment value" relates to a numerical value, e.g. in the form of cartesian coordinates or in the form of polar coordinates that facilitates an alignment of the connector 16 along a distinct direction between the building component 12 and the support structure 14 in an alignment arrangement 32.

In an example, the alignment value or a multiplicity of alignment values is provided in the form of numerical values in a matrix to reduce computing time, not shown in Fig. 1.

The term "alignment arrangement" relates to a target position of the building component 12 with respect to the support structure 14 that enables their desired functional interaction such that the building component 12 supports the function of the support structure 14, and the support structure 14 supports the function of the building component 12.

In an example, the procedure of providing the alignment arrangement 32 can also be described and understood as an integration process of the building component 12 into the support structure 14. For example, the connection interface 10 can therefore be described as integration interface.

For bringing the building component 12 and the support structure 14 in an alignment arrangement 32 can also be referred to as to functionally integrate the building component 12 in the support structure 14.

In an example, the support structure 14 and the building component 12 are aligned to provide a functioning structure, where the functions of the support structure 14 and the building component 12 complement each other.

The term "two spatial directions" relates to two orthogonal directions in three-dimensional space, as shown in Fig. 1 by arrow 34.

Align can also be referred to as coordinate towards each other or alienate.

In an example, the connector 16 is configured to be oriented between pairing points of the first and the second plurality of mounting points 24, 30 through the aligner 18.

In an example, the first and the second plurality of mounting points 24, 30 provide fastening elements such as blind nuts, not shown in Fig. 1.

Fig. 2 shows a cross-section of a general scheme of an example of a connection interface 10 in bounding interaction with mounting points 24, 30. The aligner 18 is further configured to orient the connector 16 by a plurality of alignment elements 36. The plurality of alignment elements 36 is configured for abutting in a form-fitting manner 38 to a mounting area 40 at the first and the second plurality of mounting points 24, 30 to provide an adjustment 42 of the connector 16.

The term "alignment elements" relates to parts of the aligner 18 that provide for the aligning effect of the aligner 18 towards the connector 16 in certain directions of space. The alignment elements 36 can be provided separated from each other or as an interconnected arrangement. The effect of the aligner 18 and the alignment elements 36 can also be described as a compensation of tolerances between structural geometric variations of the building component 12 and the support structure 14, such that they are able to support and complement each other to form a single functional entity, as shown in Fig. 2.

The alignment elements 36 can also be referred to as compensation or compensating elements.

The aligner 18 can also be referred to as compensator.

The plurality of alignment elements can also be referred to as alignment elements or alignment element.

The term "for abutting in a form-fitting manner" relates to a shape of an abutting boundary face part of an alignment element 36 that conforms with a shape of an abutting boundary face part of the mounting area 40, as shown in Fig. 2.

The term "mounting area" relates to a region that supplies a bounding interface between the connector 16 and the first and second plurality of mounting points 24, 30. The "mounting area" may therefore also extend along the connector 16, as shown in Fig. 2.

In an example, the mounting region is between a mounting point 24, 30 provided as a hole and the connector 16 inserted into the hole, as shown in Fig. 2.

In an example, the alignment element 36 is provided between the connector 16 and the interior face of the hole.

The aligning can also be referred to as joining, integration, connect, fit, add, assemble.

In an example, the alignment value is configured to adjust a multiplicity of aligners 18 over the first plurality of mounting points 24 and the second plurality of mounting points 30 at the same time, not shown in Fig. 2.

In an example, the alignment value is configured to adjust a multiplicity of aligners 18 at one of the first plurality of mounting points or the second plurality of mounting points 24, 30 at the same time, not shown in Fig. 2.

As an advantage, the plurality of alignment elements supports a form-fitting connection between the connector 16 and the first and second plurality of mounting points 24, 30.

In an example of Fig. 2, the plurality of alignment elements comprises at least one x-direction alignment element 44, at least one y-direction alignment element 46, at least one z-direction alignment element 48. The x-direction alignment element 44 is configured to render a length of the connector 16 between pairing points. The y-, z-direction alignment elements 46, 48 are configured to adjust a y- and z-position of the connector 16 with respect to one of the first and the second plurality of mounting points 24, 30.

The term "pairing points" describes one of the first plurality of mounting points 24 and one of the second plurality of mounting points 30 that have a distance towards each other that is the shortest after the distance between the building component 12 and the support structure 14 at the same site of one of the pairing points, as shown in Fig. 2.

In an example, the x-direction follows the aircraft from rear end to front end, not shown in Fig. 2.

As an advantage, the connector 16 can be fine-tuned to any direction in three-dimensional space. As an advantage any alignment between the building component 12 and the support structure 14 that is allowed by the shape of the building component 12 and the shape of the support structure 14 is facilitated.

In an example of Fig. 2, the plurality of alignment elements comprises at least one of the group of: excentre elements, extendable bolt elements and trusswork members.

The term "excentre element" relates to an elongated object comprising an inner lumen or volume with a wall. The inner lumen is configured to take up a fixation element like, i.e., a bolt structure, i.e. the connector 16. The inner lumen is a fixation element through hole, as shown in Fig. 2.

In an example, the excentre elements are cylindrical objects with an inner volume defined by a circular cross-section, as shown in Fig. 2.

In an example, the centre of the excentre element agrees with the centre of the inner volume of the excentre element, as shown in Fig. 2.

In an example, the centre of the excentre element deviates from the centre of the inner volume of the excentre element. In consequence, the centre of a bolt structure, i.e. the connector 16 comprised by the inner volume will also deviate from the centre of the excentre elements, being "ex centre", as shown in Fig. 2.

The term "extendable bolt elements" relates to a rod-like columnar structure that comprises a construction that makes the distance between the first and second end 22, 28 of the structure elongatable. The "extendable bolt elements" is configured to be telescopable, as shown in Fig. 2.

The term "trusswork members" relates to stick-like structure that are able to form, via their connecting ends mounted to the mounting points 24, 30, the connector 16 as three-dimensional framework, that can be adjusted in three spatial directions, not shown in Fig. 2.

In an example, the connector 16 is an alignment element or the connector 16 is formed from a multiplicity of alignment elements, not shown in Fig. 2.

As an advantage, the excentre elements provide a step less and form fit tolerances compensation. As an advantage, the excentre elements provide a light and cheap tolerance compensation. As an advantage, the excentre elements provide less addition of material weight and do not need a pretension of the connecting bolts to handle the reaction load of, e.g. teeth of a teeth plate. As an advantage, the connection interface 10 allows the substitution of teeth plates by excentre elements.

In an example of Fig. 2, the y, z-direction alignment elements 46, 48 are provided as a double excentre assembly 50 from excentre elements 52 that provide a form-fitting connection between the first and the second plurality of mounting points 24, 30 and the connector 16. The connector 16 is configured to comprise the x-direction alignment element 44 as an x-extendable bolt element 54. The x-extendable bolt element 54 provides for a sticked tolerance adjustment between the pairing points. Preferably, at least one excentre element of the double excentre assembly 50 conforms with the connector 16 at its maximum extendable length.

The term "double excentre assembly" relates to a combination of at least two excentre elements 52, wherein a first excentre element is comprised by the inner volume of the second excentre element. Both excentre elements 52 form a common through hole for receiving the connector 16, as shown in Fig. 2.

The double excentre assembly can also be referred to as double excentre element or double excentre bush or bushing.

In an example, the connection interface 10 is provided from two double excentre assemblies. One of the double excentre assemblies is provided at the one of the first plurality of mounting points 24 and one is provided at the second plurality of mounting points 30. The two the double excentre assemblies form-fittingly abut to the connector 16 in between, The connector 16 in between can also be provided as a single x-extendable bolt element 54 or from two single x-extendable bolt element 54 coupled to each other, not shown in Fig. 2.

The term "x-extendable bolt element" relates to columnar structure that is provided from two columnar elements. One columnar element encompasses at least a portion of the other columnar element. The two columnar elements can be shifted with respect to each other in order to change the length of the hole columnar structure, as shown in Fig. 2. The columnar elements can be fixed with respect to each other at a predetermined length by having matching and engageable protrusions like thread-like sections or toothing elements, not shown in Fig. 2. In an example, to fix the two columnar elements with respect to each other, blocking elements are provided at the columnar structure, not shown in Fig. 2. In an example, a spring-like element is provided inside the columnar structure to shift the columnar elements with respect to each other, not shown in Fig. 2.

The term "sticked tolerance adjustment" relates to a stepwise adaption of the length of the x-extendable bolt element. 54, as shown in Fig. 2

The term "conforms with the connector 16 at its maximum extendable length" relates to a setting where the x-extendable bolt element 54 is smaller in length than one of the excentre elements 52 such that the extension of the x-extendable bolt element 54 does cause a separation of the excentre elements 52 in the double excentre assembly 50, as shown in Fig. 2.

As an advantage, through an intelligent, coupled adjustment of the excentre elements 52 of the double excentre assembly 50, the mounting points 24, 30, i.e. the fastening region can be translated as well as turned within the plane.

In an example not shown in Fig. 2, the aligner 18 provides an adjustment of the alignment arrangement 32, wherein the support structure 14 comprises a primary structure subject to aerodynamic loads and the building component 12 comprises a secondary structure.

In an example, the secondary structure is a monument installation, like doors, galleys, a floor support or a cabin floor support arrangement.

In an example, the alignment arrangement 32 comprises a first primary structure and a second primary structure.

In an example, the primary structure is a standard layer, the connection surface is the integration layer and the secondary structure is a customized layer, not shown in Fig. 2.

In an example, the first primary structure comprises a door frame integrated in a fuselage and the second primary structure comprises a door element, such as a door.

In an example, the connection interface 10 facilitates an alignment arrangement 32 between the door and the door frame such that the door is properly lockable at the door frame.

In an example, an aircraft is provided comprising the connection interface 10, not shown in Fig. 2.

In an example, an aircraft is provided comprising an airframe, as a primary structure and an aircraft cabin as well as an aircraft cabin floor support construction. At least one of the aircraft cabin as well as an aircraft cabin floor support construction is mounted to the airframe via the connection interface 10, not shown in Fig. 2.

As an advantage, the connection interface 10 between the primary structure and the door can be provided outside the door which decreases the weight of the door for the connection interface 10. As an advantage, an adjustability of the connection interface 10 eliminates the weight from the door and allows a plug and play installation of the door. As an advantage, the customization of cabin equipment is highly facilitated. As an advantage, a more precise and accurate arrangement of cabin equipment is achieved. As an advantage, cabin space is exploited more efficiently.

In another example of Fig. 2, the aligner 18 further comprises insulation elements 56. The insulation elements 56 are configured to provide a form-fitting electric insulation between the building component 12 and the support structure 14.

The term "insulation elements" relates to dielectric objects that stop a voltage and electric current flow from one side of the object to the other.

The term "form-fitting electric insulation" relates to a layer of an electric dielectric material, e.g. to cover the bounding surface of the connector 16 to the aligner 18 or the connector 16 to the building component 12 and the support structure 14, not shown in Fig. 2.

In an example, the insulation element 56 is provided from a polymer, not shown in Fig. 2.

The aligner can also be referred to as aligners.

In an example, the insulation elements 56 are configured to stop a voltage and current flow from the primary to the secondary structure, not shown in Fig. 2.

In an example, the connection interface 10 is provided from a plurality of connectors 16 and of aligners 18 that form a three-dimensionally adjustable coupling and support area between the building component 12 and the support structure 14.

In an example, the insulation elements 56 are provided by funnel blossom interface members.

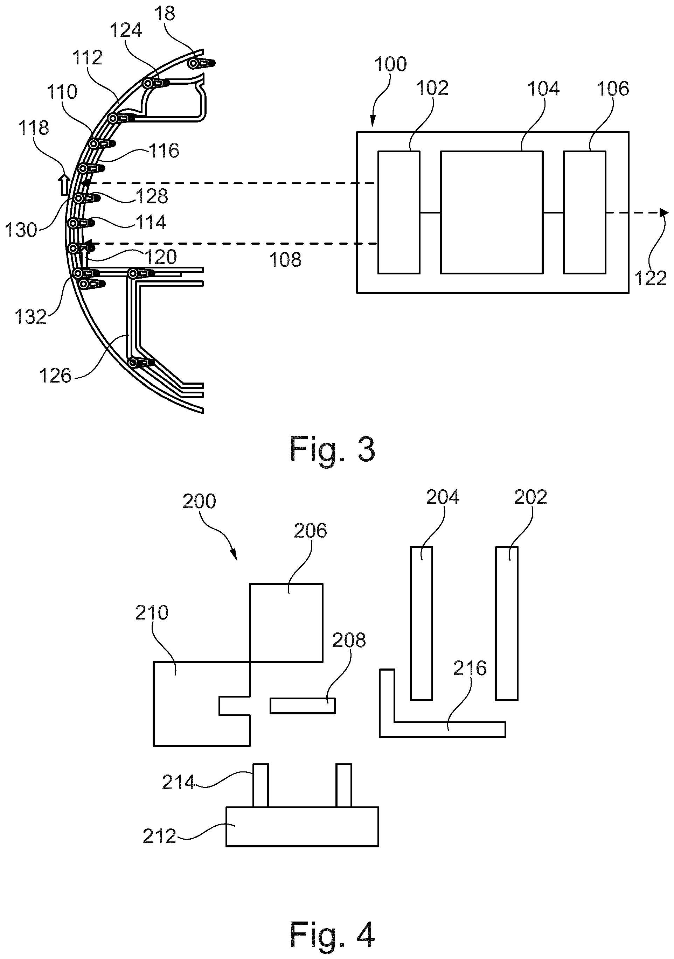

Fig. 3 shows a general scheme of an example of a measuring device 100. The measuring device 100 for mounting of a building component 116 to a support structure 112 with a connection interface, the measuring device 100 comprises an optical detection unit 102, a processing unit 104 and an output 106. The optical detection unit 102 is configured to detect, as shown by arrows 108 a first plurality of mounting points 110 at the support structure 112 and to detect a second plurality of mounting points 114 at the building component 116. The processing unit 104 is configured to determine a first geometrical relation 118 of the detected first plurality of mounting points 110, to determine a second geometrical relation 120 of the detected second plurality of mounting points 114, to compare the determined first and second geometrical relations 118, 120 to obtain deviations in view of a matching of the first plurality of mounting points 110 with the second plurality of mounting points 114 and to compute an alignment value 122 based on the obtained geometrical differences for adjusting a connector 124 in an orienting manner through an aligner 18, not shown in Fig. 3, both provided by a connection interface 126 between each pair of points 128 of the first plurality of mounting points 110 and the second plurality of mounting points 114, to bring the building component 116 and the support structure 112 in an alignment arrangement 32. The output 106 is configured to output 106 the alignment value 122 for an adjustment of the connector 124.

The term "measuring device" relates to an instrument that is arrangeable at certain building components 116 or support structures 112, as shown in Fig. 3.

The term "optical detection unit" relates to a unit with a detector configured to generate a measurable electronic signal from being contacted by photons.

In an example, the optical detection unit 102 is provided as a CCD chip in a digital camera, a smartphone or any other mobile device, not shown in Fig. 3.

In an example, the optical detection unit 102 comprises a laser scanner and a corresponding detector, not shown in Fig. 3.

In an example, the mounting points 110, 114 are detected by mechanical sensing or ultrasound, not shown in Fig. 3.

The term "processing unit" relates to any element that is configured to process data from the optical detection unit.

In an example, the processing unit 104 comprises a GPU, not shown in Fig. 3. The term "output" relates to an interface to access the alignment value 122.

In an example, the output 106 is a display screen, not shown in Fig. 3.

The term "geometrical relation" relates to the physical orientation, shape and position in three-dimensional space of the mounting points 110, 114.

The term "geometrical differences" relates to the differences of the mounting points 110, 114 with respect to physical orientation, shape and position in three-dimensional space.

The geometrical differences can also be referred to as deviations in view of a matching of the first plurality of mounting points 110 with the second plurality of mounting points 114.

The "pair of points" can also be referred to as "pairing points".

In an example, the alignment value 122 considers the needed adjustment within the plane, as translation and rotation of the mounting points 110, 114, i.e. the fastening regions, by the aligners 18.

To bring the building component 116 and the support structure 112 in alignment can also be referred to as to functionally integrate the building component 116 in the support structure 112.

In an example not shown in Fig. 3, the processing unit 104 is further configured to compare the determined first geometrical relation 118 with a preset support structure 112 target geometry to obtain a support structure-based difference and to compare the determined second geometrical relation 120 with a preset building component target geometry to obtain a building component-based difference. The output 106 is configured to output 106 the alignment value 122 based on the support structure-based difference and the building component-based difference to adjust the connector 124 to both, the building component 116 and the support structure 112.

The term "a preset support structure target geometry" relates to a saved standard model on the basis of numerical values.

In an example, the preset support structure target geometry is a digital model or a digital twin of the support structure 112.

The term "support structure-based difference" relates to the differences between for example a manufactured support structure 112 and a model of the support structure 112 in physical orientation, shape and position in three-dimensional space.

In an example, the geometrical differences are represented as a heat map of the digital twins of the building component 116 and the support structure 112.

The term "building component-based difference" relates to the differences between for example a manufactured building component 116 and a model of building component 116 in physical orientation, shape and position in three-dimensional space.

The term "preset building component target geometry" relates to a saved standard model on the basis of numerical values.

The term "to adjust the connector to both" relates to the way in which the connection interface 126 and especially its aligners 18 are adjusted to the support structure 112-based difference and building component-based difference. The aligners 18 are adjusted to a deviation of the first plurality of mounting points 110 and the second plurality of mounting points 114, rather than simply adjusting them to a deviation of the first plurality of mounting points 110 only. In other words, a bi-adjustment of the aligners 18 results. Therefore, structural differences at the building component 116 and at the support structure 112 can both be brought into a better agreement.

In an example, the support structure- and building component-standard geometry is saved in a memory unit that is accessible by the processing unit 104.

As an advantage, a more efficient and stable way in compensating for structural differences between a building component 116 and a support structure 112 results. As an advantage, structural differences of both the building component 116 and the support structure 112 can be accepted and considered during the alignment.

In an example of Fig. 3, the alignment value 122 is configured to consider local geometrical differences 130 at each pair of points 128 with respect to a global geometrical difference 132 of all pairs of points of the first plurality of mounting points 110 and the second plurality of mounting points 114. If a high local geometrical difference 130 prevents establishing a connector 124 between a local pair of points, the alignment value 122 is configured to adjust the connection interface 126 such that the global geometrical difference 132 is increased over all pairs of points in order to lower the high local geometrical difference 130 for establishing the connector 124.

The term "local geometrical differences" relates to deviations that are focused on the area between one of the first plurality of mounting points 110 and a complementary one of the second plurality of mounting points 114, as shown in Fig. 3.

In an example, the local differences are considered in the adjustment of the whole connection support having a multiplicity of connectors 124 to be adjusted to establish the missing link between the pair of points 128. Hence the other established connector 124s that impose a constrain on the connection between the building component 116 and the support structure 112 must be adjusted in order to release the constrain to provide for the establishment of the connector 124 at the local pair of points, not shown in Fig. 3.

The term "global geometrical difference" relates to a single deviation between the building component 116 and the support structure 112 that is caused by a multiplicity of pairing points between the first and the second plurality of pairing points, as shown in Fig. 3.

In an example, the pairing points are the basis for the alignment between the building component 116 and the support structure 112.

As an advantage, the measurement device assures a complete establishment of connector 124s between the building component 116 and the support structure 112 over a larger area with complex geometries.

In an example not shown in Fig. 3, the alignment value 122 is configured to allow a pre-adjustment of the connection interface 126 at the building component 116 and/or the support structure 112, before the connector 124 between the building component 116 and the support structure 112 is established.

The term "pre-adjustment" relates to an adjustment of the aligner 18s respectively of the connectors 124 at the connection interface 126 before the connection interface 126 is brought into association with the building component 116 or the support structure 112.

As an advantage, a faster and more efficient alignment of the building component 116 and the support structure 112 is possible.

In an example not shown in Fig. 3, the adjustment value is configured for an adjustment of the connection interface 126 to compensate for structural tolerances and/or for manipulating load paths between the building component 116 and the support structure 112.

The term "structural tolerances" relates to variations in the form, shape and thickness of the building component 116 and the support structure 112 that induce a deviation in the complementary ones of the first and second plurality of mounting points 110, 114 that lead to a misalignment between the building component 116 and the support structure 112.

The term "manipulating load paths" relates to a way in which forces are transferred between the building component 116 and the support structure 112 via the connector 124, which is influenced by the aligner 18.

In an example, the alignment value can be applied to manipulate, steer and fine-tune load paths between the building component 116 and the support structure 112 that influence the aerodynamic behavior of at least one of the building component 116 and the support structure 112.

As an advantage, a better integration of the building component 116 and the support structure 112 in their functional context results.

In an example not shown in Fig. 3, the alignment value is configured to account for changes of the building component 116 and the support structure 112 before and after mounting to the alignment arrangement 32.

The term "changes" relates to changes in the form, shape, composition and material structure of the building component 116 and the support structure 112 before, after and during mounting also.

In an example, the changes are induced by environmental conditions such as humidity and temperature or atmospheric compositions.

As an advantage, a faster alignment of the building component and the support structure results. As an advantage, a higher variability of materials can be used for the support structure and the building component. As an advantage, a more time efficient and simpler assembly process of the building component and the support structure is provided. As an advantage, a tighter and more stable connection between the building component and the support structure is achieved.

Fig. 4 shows a general scheme of an example of a system 200 for aligning a building component 202 and a support structure 202. The system 200 for aligning a building component 202 and a support structure 204, comprises a measuring device 206 according to one of the previous examples. A connection interface 208 according to one of the previous examples. A connection interface adjustment device 210, a transport unit interface 212 with a pick-up unit 214 and an assembly unit 216. The measuring device 206 is connected to the connection interface adjustment device 210 to transfer an alignment value to the connection interface adjustment device. The connection interface adjustment device 210 is configured to hold the connection interface 208 while adjusting at least one connector 124, not shown in Fig. 4, via at least one aligner 18 according to the alignment value to provide an adjusted connection interface. The transport unit interface 212 is configured for: Taking-up of the adjusted connection interface with the pick-up unit 214, Transferring of the adjusted connection interface in a predetermined orientation to a second plurality of mounting points 114, not shown in Fig. 4, of a building component 202 and Releasing the adjusted connection interface in a predetermined orientation towards the building component 202 to form an interfaced building component 202. The assembly unit 216 is configured for transferring the interfaced building component 202 towards the support structure 202 and establishing connectors 124 between each pair of points 128 of the second plurality of mounting points 114 and a first plurality of mounting points 110, not shown in Fig. 4.

The term "system" relates to a single unit or multiple interacting objects that provide for the alignment and assembly of the building component 202 and the support structure 202 by using the connection interface 208.

The term "connection interface adjustment device" relates to a unit that can carry the connection interface 208 in a way that its aligner 18, not shown in Fig. 4, is adjustable and that the adjusted aligner 18 remains in its adjusted state.

The term "transport unit interface" relates to an entity that collects the connection interface 208 with the pick-up unit 214 and transports and maneuvers the connection interface 208 along a predetermined and precise path, not shown in Fig. 4.

The term "pick-up unit" relates to an entity that grabs and collects the connection interface 208 such that the adjusted aligner 18 remains in its adjusted position.

The term "assembly unit" relates to a unit that is mobile or immobile and holds the building component 202 and/or the support structure 202 to join them together.

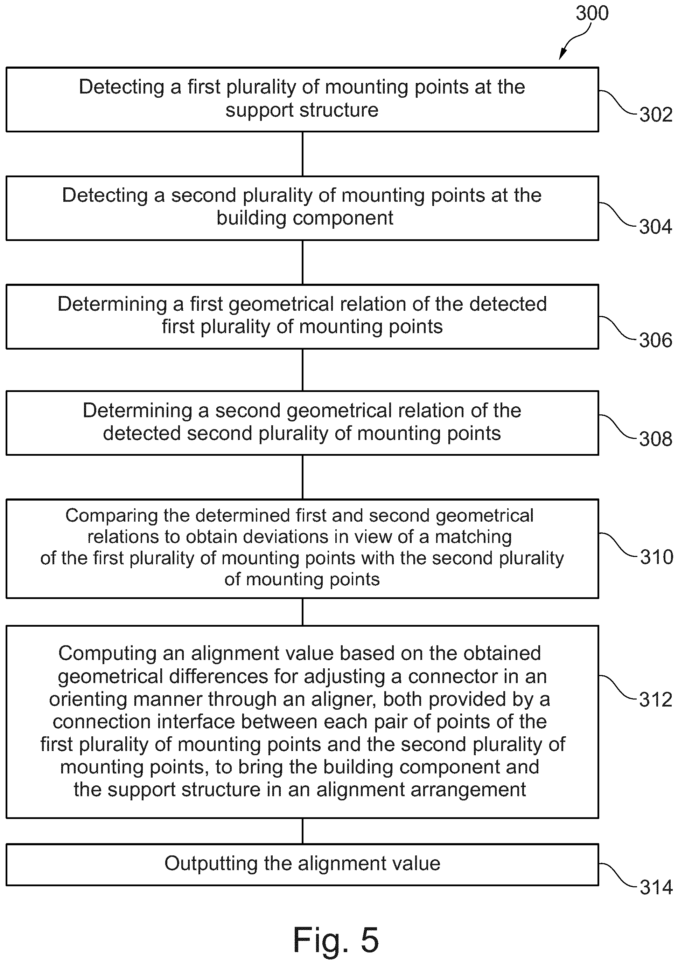

Fig. 5 shows basic steps of an example of a method 300 for adjusting a connection interface 10. The method 300 for adjusting a connection interface 10 for aligning a building component 12 with a support structure 14, comprises following steps with reference to Fig. 1:
- In a first step 302 a first plurality of mounting points 24 at the support structure 14 is detected.
- In a second step 304 a second plurality of mounting points 30 at the building component 12 is detected.
- In a third step 306 a first geometrical relation of the detected first plurality of mounting points 24 is determined.
- In a fourth step 308 a second geometrical relation of the detected second plurality of mounting points 30 is detected.
- In a fifth step 310 the determined first and second geometrical relations are compared to obtain deviations in view of a matching of the first plurality of mounting points 24 with the second plurality of mounting points 30.
- In a sixth step 312 an alignment value based on the obtained geometrical differences for adjusting a connector 16 in an orienting manner through an aligner 18, both provided by a connection interface 10 between each pair of points of the first plurality of mounting points 24 and the second plurality of mounting points 30, to bring the building component 12 and the support structure 14 in an alignment arrangement 32 is computed.
- In a seventh step 314 the alignment value for an adjustment of the connector 16 is outputted.

In an example, an existing cabin equipment is replaced by a newly manufactured cabin equipment and integrated in a primary structure of the aircraft by the connection interface 10.

In an example, a method for providing a connection interface 10 comprises the following steps:
- Providing at least one connector 16.
- Providing at least one aligner 18. The connector 16 comprises a primary fastening region 20 at a first end 22 configured to be fastened to one of a first plurality of mounting points 24 at the support structure 14 and a secondary fastening region 26 at a second end 28 configured to be fastened to one of a second plurality of mounting points 30 at the building component 12.
- Arranging the aligner 18 between the first end 22 and the second end 28. The aligner 18 is configured to align the connector 16 in an oriented manner according to an alignment value for bringing the building component 12 and the support structure 14 in an alignment arrangement 32.
- Providing an adjustment in at least two spatial directions with the aligner 18.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A connection interface (10) for mounting a building component (12) to a support structure (14), the interface comprising:
- at least one connector (16); and
- at least one aligner (18);
wherein the connector comprises:
- a primary fastening region (20) at a first end (22) configured to be fastened to one of a first plurality of mounting points (24) at the support structure; and
- a secondary fastening region (26) at a second end (28) configured to be fastened to one of a second plurality of mounting points (30) at the building component;
wherein the aligner is arranged between the first end and the second end; and wherein the aligner is configured to align the connector in an oriented manner according to an alignment value for bringing the building component and the support structure in an alignment arrangement (32); and
wherein the aligner provides an adjustment in at least two spatial directions.

2. Interface according to claim 1, wherein the aligner is further configured to orient the connector by a plurality of alignment elements (36); and
wherein the plurality of alignment elements is configured for abutting in a form-fitting manner (38) to a mounting area (40) at the first and the second plurality of mounting points to provide an adjustment (42) of the connector.

3. Interface according to claim 1 or 2, wherein the plurality of alignment elements comprises:
- at least one x-direction alignment element (44);
- at least one y-direction alignment element (46);
- at least one z-direction alignment element (48);
wherein the x-direction alignment element is configured to render a length of the connector between pairing points; and
wherein the y-, z-direction alignment elements are configured to adjust a y- and z-position of the connector with respect to one of the first and the second plurality of mounting points.

4. Interface according to claim 1, 2 or 3, wherein the plurality of alignment elements comprises at least one of the group of: excentre elements, extendable bolt elements and trusswork members.

5. Interface according to one of the preceding claims, wherein the y, z-direction alignment elements are provided as a double excentre assembly (50) from excentre elements (52) that provide a form-fitting connection between the first and the second plurality of mounting points and the connector;
wherein the connector is configured to comprise the x-direction alignment element as an x-extendable bolt element (54);
wherein the x-extendable bolt element provides for a sticked tolerance adjustment between the pairing points; and
wherein at least one excentre element of the double excentre assembly conforms with the connector at its maximum extendable length.

6. Interface according to one of the preceding claims, wherein the aligner provides an adjustment of the alignment arrangement, wherein the support structure comprises a primary structure subject to aerodynamic loads and the building component comprises a secondary structure.

7. Interface according to one of the preceding claims, wherein the aligner further comprises insulation elements (56); and
wherein the insulation elements are configured to provide a form-fitting electric insulation between the building component and the support structure.

8. A measuring device (100) for mounting of a building component to a support structure with a connection interface, the measuring device comprising:
- an optical detection unit (102);
- a processing unit (104); and
- an output (106);
wherein the optical detection unit is configured to detect a first plurality of mounting points (110) at the support structure (112) and to detect a second plurality of mounting points (114) at the building component (116);
wherein the processing unit is configured to: determine a first geometrical relation (118) of the detected first plurality of mounting points; to determine a second geometrical relation (120) of the detected second plurality of mounting points; to compare the determined first and second geometrical relations to obtain deviations in view of a matching of the first plurality of mounting points with the second plurality of mounting points; and to compute an alignment value (122) based on the obtained geometrical differences for adjusting a connector (124) in an orienting manner through an aligner, both provided by a connection interface (126) between each pair of points (128) of the first plurality of mounting points and the second plurality of mounting points, to bring the building component and the support structure in an alignment arrangement; and
wherein the output is configured to output the alignment value for an adjustment of the connector.

9. Device according to claim 8, wherein the processing unit is further configured to compare the determined first geometrical relation with a preset support structure target geometry to obtain a support structure-based difference; and to compare the determined second geometrical relation with a preset building component target geometry to obtain a building component-based difference; and
wherein the output is configured to output the alignment value based on the support structure-based difference and the building component-based difference to adjust the connector to both, the building component and the support structure.

10. Device according to claim 8 or 9, wherein the alignment value is configured to consider local geometrical differences (130) at each pair of points with respect to a global geometrical difference (132) of all pairs of points of the first plurality of mounting points and the second plurality of mounting points; and
wherein, if a high local geometrical difference prevents establishing a connector between a local pair of points, the alignment value is configured to adjust the connection interface such that the global geometrical difference is increased over all pairs of points in order to lower the high local geometrical difference for establishing the connector.

11. Device according to claim 8, 9 or 10, wherein the alignment value is configured to allow a pre-adjustment of the connection interface at the building component and/or the support structure, before the connector between the building component and the support structure is established.

12. Device according to one of the claims 8 to 11, wherein the adjustment value is configured for an adjustment of the connection interface:
- to compensate for structural tolerances; and/or
- for manipulating load paths;
between the building component and the support structure.

13. Device according to one of the claims 8 to 12, wherein the alignment value is configured to account for changes of the building component and the support structure before and after mounting to the alignment arrangement.

14. A system (200) for aligning a building component (202) and a support structure (204), comprising:
- a measuring device (206) according to one of the claims 8 to 13;
- a connection interface (208) according to one of the claims 1 to 7;
- a connection interface adjustment device (210);
- a transport unit interface (212) with a pick-up unit (214); and
- an assembly unit (216);
wherein the measuring device is connected to the connection interface adjustment device to transfer an alignment value to the connection interface adjustment device;
wherein the connection interface adjustment device is configured to hold the connection interface while adjusting at least one connector via at least one aligner according to the alignment value to provide an adjusted connection interface;
wherein the transport unit interface is configured to:
- Take-up of the adjusted connection interface with the pick-up unit;
- Transfer of the adjusted connection interface in a predetermined orientation to a second plurality of mounting points of a building component; and
- Release the adjusted connection interface in a predetermined orientation towards the building component to form an interfaced building component;
wherein the assembly unit is configured for transferring the interfaced building component towards the support structure and establishing connectors between each pair of points of the second plurality of mounting points and a first plurality of mounting points.

15. A method (300) for adjusting a connection interface for aligning a building component with a support structure, comprising the steps:
- Detecting (302) a first plurality of mounting points at the support structure;
- Detecting (304) a second plurality of mounting points at the building component;
- Determining (306) a first geometrical relation of the detected first plurality of mounting points;
- Determining (308) a second geometrical relation of the detected second plurality of mounting points;
- Comparing (310) the determined first and second geometrical relations to obtain deviations in view of a matching of the first plurality of mounting points with the second plurality of mounting points; and
- Computing (312) an alignment value based on the obtained geometrical differences for adjusting a connector in an orienting manner through an aligner, both provided by a connection interface between each pair of points of the first plurality of mounting points and the second plurality of mounting points, to bring the building component and the support structure in an alignment arrangement;
- Outputting (314) the alignment value for an adjustment of the connector.
